# EUROPEAN PATENT SPECIFICATION

(11) **EP 3 832 522 B1**
(45) Date of publication and mention of the grant of the patent: **17.01.2024**
(21) Application number: 19844212.1
(22) Date of filing: 22.07.2019
(51) Int. Cl.: G06K 7/10

(54) **METHOD FOR READING ULTRA HIGH FREQUENCY RFID TAG**
VERFAHREN ZUM LESEN VON ULTRAHOCHFREQUENTEN RFID-ETIKETTEN
PROCÉDÉ DE LECTURE D'ÉTIQUETTE RFID À FRÉQUENCE ULTRA-HAUTE

(30) Priority: 02.08.2018 CN 201810867413
(43) Date of publication of application: 09.06.2021
(73) Proprietor: Wuxi Hyesoft Softwave Technology Co., Ltd., Wuxi, Jiangsu 214000 (CN)
(72) Inventor: YU, Liqun, Wuxi, Jiangsu 214000 (CN)
(74) Representative: Ipside
(86) International application number: PCT/CN2019/097001
(87) International publication number: WO 2020/024823

(56) References cited:
- EP-A2- 1 612 579
- CN-A- 101 604 372
- CN-A- 102 073 833
- CN-A- 103 366 199
- CN-A- 106 778 952
- CN-A- 108 985 125
- US-A1- 2005 035 849
- US-A1- 2016 117 534
- US-B1- 9 852 319

## Description

### Technical Field

The present invention relates to a method for reading an ultra-high frequency RFID tag, and pertains to the technical field of radio frequency identification.

### Background Art

Ultra-high frequency RFID tag reading is frequently used in the supply chain and circulation fields. For example, it is necessary to scan RFID tags in a packaging box to determine which products are in the packaging box. The reading result and reading efficiency are extremely important.

There are two existing methods for determining whether all ultra-high frequency RFID tags have been read, namely, setting reading time and setting the number of times of reading.

In the case of setting reading time, for example, setting the reading time to 3 seconds, 5 seconds, or 10 seconds, an antenna keeps reading RFID tags, and once the time is up, it is considered that all the tags have been read. This solution has a disadvantage in that the number of RFID tags in each packaging box is varying. More tags lead to longer reading time, and fewer tags lead to shorter reading time. If the same time is set, the reading time for a packaging box with more tags may be insufficient to read all the tags, while the reading time for a packaging box with fewer tags is a waste.

In the case of setting the number of times of reading, after a system sets an algorithm for the number of times of cyclic reading, it is considered that all tags have been read. However, when there are a large number of tags, in the case of setting the number of times of reading, whether all the tags have been read still cannot be determined. An example is the patent document with the patent application No. 201610604749.6, and refer to claim 13 of this document for details.

Patent document US 2005/035849 A1 disclosed a method for counting objects within defined area, using tag transceivers attached to each object and interrogating transmitters scattered at different places within the defined area.

Patent document CN 103 366 199 A disclosed an assembly line RFID monitoring system for monitoring assemblies. The assembly line RFID monitoring system comprises at least one monitoring assembly, a temporary database, a redundant filter and a judging device

### Summary of the Invention

The present invention is set out in the appended set of claims.

### Technical Problem

The present invention solves the technical problem of how to determine that all RFID tags have actually been read.

### Solution to the Problem

### Technical Solution

The technical solution of the present invention: A method for reading an ultra-high frequency RFID tag, characterized in that an ultra-high frequency RFID scanning system comprises an ultra-high frequency RFID reader/writer 1 and an antenna group, the antenna group comprises at least two antennas 2, the antennas 2 are distributed around a scanned object 4, with RFID tags being within the scanned object 4, and the antennas 2 each are connected to the ultra-high frequency RFID reader/writer 1 through a feeder; a scanning set A for the number of RFID tags in the scanned object 4 is set, and new data in each scanning cycle is added to the scanning set A; the ultra-high frequency RFID scanning system continuously scans the scanned object 4 until no new data is added to the scanning set A, and then counting is started; if no new data is added to the scanning set A for N consecutive scanning cycles, the ultra-high frequency RFID scanning system is considered to have read all the RFID tags in the scanned object 4; and if new data is added to the scanning set A at any time in N consecutive scanning cycles, counting is restarted until no new data is added to the scanning set A for N consecutive scanning cycles, and then the ultra-high frequency RFID scanning system is considered to have read all the RFID tags in the scanned object 4.

Preferably, the number N of consecutive scanning cycles is adjusted depending on the number of RFID tags in the scanned object 4 or the difficulty of reading the tags.

Preferably, the ultra-high frequency RFID scanning system presets the number N of consecutive scanning cycles before scanning, and a value of the number N of consecutive scanning cycles is a natural number ranging from 3 to 20.

Preferably, the antennas 2 are mounted in a channel machine 3, the scanned object 4 is mounted on a conveyor line 5, the conveyor line 5 passing through the channel machine 3, and the method for reading an ultra-high frequency RFID tag is embedded in the ultra-high frequency RFID scanning system.

Preferably, the conveyor line 5 is equipped with a detection apparatus, the detection apparatus estimates the number of RFID tags in the scanned object 4 and feeds back an estimated result to the ultra-high frequency RFID reader/writer 1, and the ultra-high frequency RFID reader/writer 1 selects an appropriate number N of consecutive scanning cycles based on the estimated result.

### Beneficial Effects of the Invention

### Beneficial Effects

Advantages of the present invention: this reading method overcomes the problem that neither the setting of "reading time" nor the setting of "number of times of reading" can determine whether the ultra-high frequency RFID scanning system has actually read all the RFID tags, and the reading time and the number of times of reading in this reading method are dynamically adjusted with the number of RFID tags and the difficulty of reading the RFID tags, which not only ensures the accuracy of the reading quantity, but also improves the reading efficiency.

### Brief Description of the Drawings

### Description of the Drawings

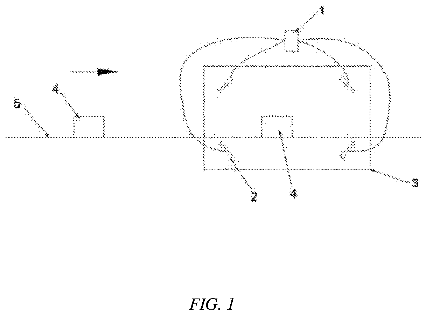

Fig. 1 is a schematic diagram of Embodiment 1.

In the figure, 1 denotes an ultra-high frequency RFID reader/writer, 2 denotes an antenna, 3 denotes a channel machine, 4 denotes a scanned object, and 5 denotes a conveyor line.

### Embodiments of the Invention

### Implementations of the Invention

A method for reading an ultra-high frequency RFID tag, characterized in that an ultra-high frequency RFID scanning system comprises an ultra-high frequency RFID reader/writer 1 and an antenna group, the antenna group comprises at least two antennas 2, the antennas 2 are distributed around a scanned object 4, with RFID tags being within the scanned object 4, and the antennas 2 each are connected to the ultra-high frequency RFID reader/writer 1 through a feeder; a scanning set A for the number of RFID tags in the scanned object 4 is set, and new data in each scanning cycle is added to the scanning set A; the ultra-high frequency RFID scanning system continuously scans the scanned object 4 until no new data is added to the scanning set A, and then counting is started; if no new data is added to the scanning set A for N consecutive scanning cycles, the ultra-high frequency RFID scanning system is considered to have read all the RFID tags in the scanned object 4; and if new data is added to the scanning set A at any time in N consecutive scanning cycles, counting is restarted until no new data is added to the scanning set A for N consecutive scanning cycles, and then the ultra-high frequency RFID scanning system is considered to have read all the RFID tags in the scanned object 4.

Preferably, the number N of consecutive scanning cycles is adjusted depending on the number of RFID tags in the scanned object 4 or the difficulty of reading the tags.

Preferably, the ultra-high frequency RFID scanning system presets the number N of consecutive scanning cycles before scanning, and a value of the number N of consecutive scanning cycles is a natural number ranging from 3 to 20.

Preferably, the antennas 2 are mounted in a channel machine 3, the scanned object 4 is mounted on a conveyor line 5, the conveyor line 5 passing through the channel machine 3, and the method for reading an ultra-high frequency RFID tag is embedded in the ultra-high frequency RFID scanning system.

Preferably, the conveyor line 5 is equipped with a detection apparatus, the detection apparatus estimates the number of RFID tags in the scanned object 4 and feeds back an estimated result to the ultra-high frequency RFID reader/writer 1, and the ultra-high frequency RFID reader/writer 1 selects an appropriate number N of consecutive scanning cycles based on the estimated result.

In Embodiment 1, a channel machine scanning an item on a conveyor line is taken as an example below for description.

As shown in Fig. 1, a channel machine 3 is mounted on a conveyor line 5, the channel machine 3 is equipped with an ultra-high frequency RFID scanning system, the ultra-high frequency RFID scanning system comprises an ultra-high frequency RFID reader/writer 1 and an antenna group, the ultra-high frequency RFID reader/writer 1 is mounted on the channel machine 3, antennas 2 each are connected to the ultra-high frequency RFID reader/writer 1 through a feeder, scanned objects 4 are paper boxes, and a varying number of products (e.g. garments, with an RFID tag being attached to each of the garments) are placed in each of the paper boxes.

It is assumed that the time for which the antenna group completes one round of reading RFID tags is an ultra-high frequency RFID reader/writer scanning cycle (briefly referred to as: scanning cycle).

Before the paper box passes through the channel machine 3, the ultra-high frequency RFID scanning system presets a value of the number N of consecutive scanning cycles. Alternatively, an appropriate number N of consecutive scanning cycles may be selected based on estimation of the number of RFID tags in the paper box made by a detection apparatus (such as a weighing device) in advance.

When the paper box passes through the channel machine 3, the paper box stays for a short time.

A scanning set A for the number of RFID tags in the paper box is set, and new data in each scanning cycle is added to the scanning set A. The ultra-high frequency RFID scanning system continuously scans the paper box until no new data is added to the scanning set A, and then counting is started; if no new data is added to the scanning set A for N consecutive scanning cycles, the ultra-high frequency RFID scanning system is considered to have read all the RFID tags in the paper box; and if new data is added to the scanning set A at any time in N consecutive scanning cycles, counting is restarted until no new data is added to the scanning set A for N consecutive scanning cycles, and then the ultra-high frequency RFID scanning system is considered to have read all the RFID tags in the paper box.

The number N of consecutive scanning cycles is adjusted depending on the number of RFID tags in the scanned object 4 or the difficulty of reading the tags.

After scanning is completed, the conveyor line transports the paper box away.

## Claims

1. A method for reading an ultra-high frequency RFID tag on or in an object to be scanned (4), the method comprising the steps of:
∘ providing an ultra-high frequency RFID scanning system comprising:
- an ultra-high frequency RFID reader/writer (1) and an antenna group,
- the antenna group comprises at least two antennas (2),
- the at least two antennas (2) being distributed around the object to be scanned (4),
- the object to be scanned (4) comprising said RFID tags, and
- each of the at least two antennas (2) each being connected to the ultra-high frequency RFID reader/writer (1) through a feeder;
∘ setting a scanning set A for the number of RFID tags;
∘ continuously scanning the object (4) in scanning cycles by the ultra-high frequency RFID scanning system;
∘ adding new data in each scanning cycle to a scanning set A;
∘ if no new data is added to the scanning set A, counting of consecutive scanning cycles is started;
∘ if new data is added to the scanning set A at any time in N consecutive scanning cycles, counting of consecutive scanning cycles is restarted and continued until no new data is added to the scanning set A for said N consecutive scanning cycles;
∘ if no new data is added to the scanning set A for said N consecutive scanning cycles, the ultra-high frequency RFID scanning system is considered to have read all the RFID tags in the scanned object (4).

2. The method for reading an ultra-high frequency RFID tag on or in an object to be scanned (4) according to claim 1, **characterized in that** the ultra-high frequency RFID scanning system presets the number N of consecutive scanning cycles before scanning, and a value of the number N of consecutive scanning cycles is a natural number ranging from 3 to 20.

## Patentansprüche

1. Verfahren zum Ablesen eines Ultrahochfrequenz-RFID-Tags auf oder in ein abzutastendes Objekt (4), das Verfahren umfassend die folgenden Schritte:
o Bereitstellen eines Ultrahochfrequenz-RFID-Scansystems, umfassend:
- ein Ultrahochfrequenz-RFID-Lese-/Schreibgerät (1) und eine Antennengruppe,
- die Antennengruppe, die mindestens zwei Antennen (2) umfasst,
- die mindestens zwei Antennen (2) um das zu scannende Objekt (4) herum verteilt sind,
- das zu scannende Objekt (4), umfassend die RFID-Tags, und
- jede der mindestens zwei Antennen (2) ist jeweils über eine Zuleitung mit dem Ultrahochfrequenz-RFID-Lese-/Schreibgerät (1) verbunden;
o Einstellen eines Scansets A für die Anzahl der RFID-Tags ;
o kontinuierliches Scannen des Objekts (4) in Scanzyklen durch das Ultrahochfrequenz-RFID-Scansystem;
o Hinzufügen neuer Daten in jedem Scanzyklus zu einem Scanset A;
o wenn keine neuen Daten zum Scanset A hinzugefügt werden, beginnt die Zählung der aufeinanderfolgenden Scanzyklen;
o wenn zu irgendeinem Zeitpunkt in N aufeinanderfolgenden Scanzyklen neue Daten zu der Scanmenge A hinzugefügt werden, wird die Zählung der aufeinanderfolgenden Scanzyklen neu gestartet und fortgesetzt, bis für die N aufeinanderfolgenden Scanzyklen keine neuen Daten zu der Scanmenge A hinzugefügt werden;
o wenn während der N aufeinanderfolgenden Scanzyklen keine neuen Daten zum Scanset A hinzugefügt werden, wird davon ausgegangen, dass das Ultrahochfrequenz-RFID-Scansystem alle RFID-Tags im gescannten Objekt (4) gelesen hat.

2. Verfahren zum Ablesen eines Ultrahochfrequenz-RFID-Tags auf oder in einem zu scannenden Objekt (4) nach Anspruch 1,
**dadurch gekennzeichnet, dass** das Ultrahochfrequenz-RFID-Abtastsystem die Anzahl N der aufeinanderfolgenden Abtastzyklen vor dem Abtasten voreinstellt und ein Wert der Anzahl N der aufeinanderfolgenden Abtastzyklen eine natürliche Zahl zwischen 3 und 20 ist.

## Revendications

1. Procédé de lecture d'une étiquette RFID à fréquence ultra-haute sur ou dans un objet à balayer (4), le procédé comprenant les étapes consistant à :
o fournir un système de balayage RFID à fréquence ultra-haute comprenant :
- un lecteur/enregistreur RFID à fréquence ultra-haute (1) et un groupe d'antennes,
- le groupe d'antennes comprend au moins deux antennes (2),
- les au moins deux antennes (2) étant réparties autour de l'objet à balayer (4),
- l'objet à balayer (4) comprenant lesdites étiquettes RFID, et
- chacune des au moins deux antennes (2) étant chacune connectée au lecteur/enregistreur RFID à fréquence ultra-haute (1) via un dispositif d'alimentation ;
o paramétrer un paramètre de balayage A pour le nombre d'étiquettes RFID ;
o balayer en continu l'objet (4) lors de cycles de balayage par le système de balayage RFID à fréquence ultra-haute ;
o ajouter de nouvelles données dans chaque cycle de balayage à un paramètre de balayage A ;
o si aucune nouvelle donnée n'est ajoutée au paramètre de balayage A, démarrer le comptage des cycles de balayage consécutif ;
o si de nouvelles données sont ajoutées au paramètre de balayage A à un quelconque moment pendant N cycles de balayage consécutifs, redémarrer le comptage de cycles de balayage consécutifs et poursuivre jusqu'à ce qu'aucune nouvelle donnée ne soit ajoutée au paramètre de balayage A pour lesdits N cycles de balayage consécutifs ;
o si aucune nouvelle donnée n'est ajoutée au paramètre de balayage A pendant lesdits N cycles de balayage consécutifs, considérer que le système de balayage RFID à fréquence ultra-haute a lu toutes les étiquettes RFID dans l'objet balayé (4).

2. Procédé de lecture d'une étiquette RFID à fréquence ultra-haute sur ou dans un objet à balayer (4) selon la revendication 1, **caractérisé en ce que** le système de balayage RFID à fréquence ultra-haute préétablit le nombre N de cycles de balayage consécutifs avant le balayage, et une valeur du nombre N de cycles de balayage consécutifs est un nombre naturel allant de 3 à 20.
